# EUROPEAN PATENT APPLICATION

(11) **EP 4 725 577 A1**
(43) Date of publication of application: **15.04.2026**
(21) Application number: 24927624.7
(22) Date of filing: 20.11.2024
(51) Int. Cl.: B01D 11/02, B01D 17/02, C22B 3/22

(54) **VERTICAL SOLVENT EXTRACTION DEVICE AND SOLVENT EXTRACTION SYSTEM INCLUDING MULTIPLE VERTICAL SOLVENT EXTRACTION DEVICES**

(30) Priority: 14.08.2024 KR 20240109194
(71) Applicant: Korea Zinc Co., Ltd., Seoul 03159 (KR); Kemco, Seoul 03159 (KR)
(72) Inventor: PARK, Ki Won, Seoul 05502 (KR); PARK, Sung Won, Ulsan 45003 (KR); KIM, Taek Soo, Ulsan 44046 (KR)
(74) Representative: Angerhausen, Christoph
(86) International application number: PCT/KR2024/018388
(87) International publication number: WO 2026/038617

(57) **Abstract**

A solvent extraction device comprises a mixer including a mixing container, a first solvent inlet, a second solvent inlet, a mixed solvent outlet, and an impeller, wherein the impeller mixes a first solvent and a second solvent having different densities to produce a mixed solvent, a settler including a settling container, a mixed solvent inlet, a first solvent outlet, and a second solvent outlet, and configured to separate the mixed solvent based on a density difference and a connection tube configured to connect the mixed solvent outlet with the mixed solvent inlet, wherein the settling container of the settler includes an upper surface, a lower surface formed opposite to the upper surface, and a side surface extending between the upper surface and the lower surface, and the mixed solvent inlet is formed on the side surface of the settling container or in an interior of the settling container.

## Description

### TECHNICAL FIELD

The present disclosure relates to a vertical solvent extraction device and a solvent extraction system including a plurality of vertical solvent extraction devices. Specifically, the present disclosure relates to a vertical solvent extraction device that mixes an organic solvent with an aqueous solvent containing metal ions to separate the metal ions from impurity ions, and then separates the metal ions by the density difference between the aqueous and organic solvents, and a solvent extraction system including a plurality of vertical solvent extraction devices.

### BACKGROUND

A solvent extraction device is a device that separates target metal ions from impurity ions by selectively extracting ions through the mixing of an organic solvent with an aqueous solvent containing metal ions. To implement a continuous reaction of a certain scale or higher for the separation of metal ions from impurity ions, the process is performed in a liquid-liquid separation device commonly referred to as a mixer-settler.

The mixer-settler has various forms and structures depending on the type of a target metal. For example, there are (i) the Krebs mixer-settler in which phase separation occurs in a top launder before movement to the settler below; (ii) the Reserve flow mixer-settler having a structure in which a launder is attached to a side surface of the settler and a solvent moves to the opposite end of the mixer before being introduced into the settler; and (iii) the Outokumpu vertical smooth flow (VSF) mixer-settler, which is designed with a picket fence inside the settler, allowing phase separation to occur in a high-density state immediately after the aqueous and organic phases are mixed in the mixer.

In the solvent extraction device, the fluid flow basically involves agitating the aqueous solvent and the organic solvent in the mixer for a certain period to extract the target metal ions, after which the mixture is transferred to the settler for layered separation due to the density difference between the aqueous and organic solvents. In the case of the typical mixer-settler mentioned above, the mixer and settler are positioned horizontally, with the mixer and settler having similar or identical heights. Generally, among all dimensions of the mixer-settler, the overall length of the mixer-settler is at least about three times the height.

However, conventional devices have the drawback that the area required for the actual process setup is larger than that of general hydrometallurgical processes due to the characteristics of solvent extraction processes requiring continuous and sequential reactions where at least 5 and at most 100 stages of mixer-settlers are connected in series while maintaining a constant reaction level, which results in reduced operational efficiency and increased initial investment costs.

### SUMMARY

Embodiments of the present disclosure related to a solvent extraction device having a vertical structure that allows for a reduced installation scale of unit components, offering improved separation efficiency between an aqueous solvent and an organic solvent.

One aspect of the present disclosure provides embodiments of a solvent extraction device. A solvent extraction device according to a representative embodiment comprises a mixer including a mixing container, a first solvent inlet, a second solvent inlet, a mixed solvent outlet, and an impeller, wherein the impeller mixes a first solvent and a second solvent having different densities to produce a mixed solvent, a settler including a settling container, a mixed solvent inlet, a first solvent outlet, and a second solvent outlet, and configured to separate the mixed solvent based on a density difference and a connection tube configured to connect the mixed solvent outlet of the mixer with the mixed solvent inlet of the settler, wherein the settling container of the settler includes an upper surface, a lower surface formed opposite to the upper surface, and a side surface extending between the upper surface and the lower surface, and the mixed solvent inlet is formed on the side surface of the settling container or in an interior of the settling container.

In exemplary embodiments the mixed solvent inlet is formed at a position spaced apart from the upper surface.

In exemplary embodiments the mixed solvent inlet is formed between 0.3 and 0.7 points of a height of the settling container.

In exemplary embodiments the mixed solvent outlet of the mixer is positioned higher than the mixed solvent inlet of the settler.

In exemplary embodiments the mixed solvent inlet of the settler is positioned between the first solvent outlet and the second solvent outlet.

In exemplary embodiments the solvent extraction device further comprises a buffer positioned between the mixed solvent inlet and the connection tube, wherein the buffer is arranged to surround all or part of the side surface of the settling container.

In exemplary embodiments the settler further includes a plurality of diaphragms arranged in the interior of the settling container to extend across a height direction of the settler.

In exemplary embodiments the diaphragms are formed in a net-like structure.

In exemplary embodiments the diaphragms each include a through-hole, and wherein positions of the through-holes in adjacent diaphragms among the plurality of diaphragms are offset from each other when viewed in the height direction of the settler.

In exemplary embodiments a height direction length of the settler is greater than a height direction length of the mixer.

In exemplary embodiments a height direction length of the settler is 3 times or more, but no more than 9 times, a width direction length of the settler.

In exemplary embodiments the first solvent is an organic solvent, and the second solvent is an aqueous solvent.

One aspect of the present disclosure provides embodiments of a solvent extraction system. A solvent extraction system according to a representative embodiment comprises a plurality of solvent extraction devices, wherein each of the solvent extraction devices includes a mixer including a mixing container, a first solvent inlet, a second solvent inlet, a mixed solvent outlet, and an impeller, wherein the impeller mixes a first solvent and a second solvent having different densities to produce a mixed solvent, a settler including a settling container, a mixed solvent inlet, a first solvent outlet, and a second solvent outlet, and configured to separate the mixed solvent based on a density difference; and a connection tube configured to connect the mixed solvent outlet of the mixer with the mixed solvent inlet of the settler, wherein the settling container of the settler includes an upper surface, a lower surface formed opposite to the upper surface, and a side surface extending between the upper surface and the lower surface, and the mixed solvent inlet is formed on the side surface of the settling container or in an interior of the settling container, and wherein the respective solvent extraction devices are functionally connected to each other, allowing the first solvent, the second solvent, and the mixed solvent to be exchanged.

In exemplary embodiments the solvent extraction system comprises a first device and a second device, wherein the first solvent discharged from a settler of the first device is introduced into a mixer of the second device, and the second solvent discharged from a settler of the second device is introduced into a mixer of the first device, and wherein the second solvent discharged from the settler of the first device and the first solvent discharged from the settler of the second device are recovered, respectively.

In a solvent extraction device and solvent extraction system according to the present disclosure, it is possible to achieve a reduced installation scale of unit components by a vertical structure. Furthermore, in the solvent extraction device and solvent extraction system according to the present disclosure, it is possible to improve the separation efficiency between an aqueous solvent and an organic solvent.

### BRIEF DESCRIPTION OF THE DRAWINGS

FIG. 1 is a schematic front view of a solvent extraction device according to one embodiment.
FIG. 2 is a schematic plan view of the solvent extraction device according to the embodiment.
FIG. 3 is a schematic diagram illustrating the flow of internal fluids in a settler according to one embodiment.
FIG. 4 is a schematic diagram illustrating the flow of internal fluids in the settler according to another embodiment.
FIG. 5 is a schematic diagram illustrating the flow of internal fluids in the settler according to still another embodiment.
FIG. 6 is a schematic diagram illustrating a connection tube inserted to the interior of a settling container, with a mixed solvent inlet formed in the interior of the settling container according to another embodiment.
FIG. 7 is a schematic plan view of a solvent extraction system according to one embodiment.

### DETAILED DESCRIPTION

Embodiments of the present disclosure are illustrated for the purpose of explaining the technical idea of the present disclosure. The scope of rights according to the present disclosure is not limited to the embodiments presented below or the detailed descriptions of such embodiments.

All technical and scientific terms used in the present disclosure have the meaning generally understood by those of ordinary skill in the art to which the present disclosure pertains, unless otherwise defined. All terms used in the present disclosure are chosen for the purpose of more clearly describing the present disclosure and are not chosen to limit the scope of rights according to the present disclosure.

As used in the present disclosure, expressions such as "comprising", "including", "having", and the like are to be understood as open-ended terms having the possibility of encompassing other embodiments, unless otherwise mentioned in the phrase or sentence containing such expressions.

The singular form described in the present disclosure may include a plural meaning, unless otherwise mentioned. This applies equally to the singular form recited in the claims.

As used in the present disclosure, expressions such as "first", "second", and the like are used for distinguishing a plurality of components from each other, and do not limit the order or importance of these components.

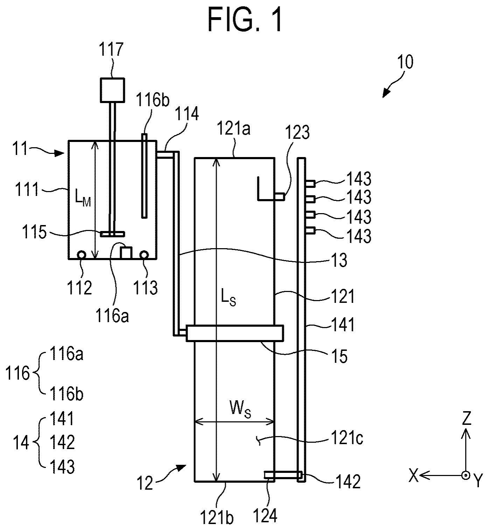

In the present disclosure, the terms "height direction" or "length direction" may be interpreted as referring to the Z-axis direction in FIGS. 1 to 7. Additionally, in the present disclosure, the term "width direction" may be interpreted as referring to any one direction in the plane where the X-axis and Y-axis intersect in FIGS. 1 to 7.

In the present disclosure, where it is mentioned in the present disclosure that one element is "connected" to another element, it is to be understood that said one element may be directly connected to said another element, or may be connected to said another element via a new additional element.

Hereinafter, descriptions are made as to embodiments of the present disclosure with reference to the accompanying drawings. In the accompanying drawings, the same or corresponding elements are denoted by the same reference numerals. In the following descriptions of the embodiments, descriptions of the same or corresponding elements may be omitted. However, even if the descriptions of elements are omitted, it is not intended that such elements are not included in a certain embodiment.

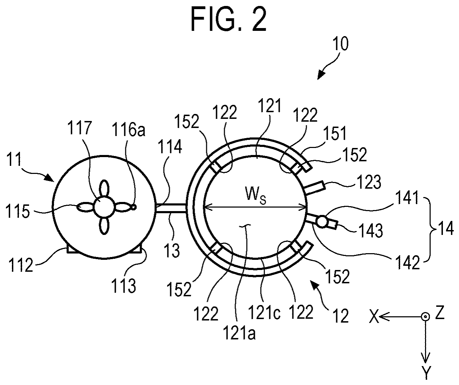

FIG. 1 is a schematic front view of a solvent extraction device 10 according to one embodiment. FIG. 2 is a schematic plan view of the solvent extraction device 10 according to the embodiment.

Referring to FIGS. 1 and 2, the solvent extraction device 10 may include a mixer 11, a settler 12, a connection tube 13, a second solvent riser 14, and a buffer 15. The solvent extraction device 10 is designed to mix a first solvent and a second solvent in the mixer 11 to cause a chemical reaction, and then transfer the mixed solvent from the mixer 11 to the settler 12 where the first and second solvents are separated by the density difference, thereby allowing for the extraction of target ions. The first and second solvents may have different densities. For example, the density of the second solvent may be greater than the density of the first solvent. For example, the first solvent may be an organic solvent and the second solvent may be an aqueous solvent.

In one embodiment, the mixer 11 may include a mixing container 111 that mixes the first and second solvents to produce the mixed solvent, a first solvent inlet 112, a second solvent inlet 113, a mixed solvent outlet 114, an impeller 115, and a precursor feed port 116. The mixing container 111 may be configured in the form of a cylinder or prism. The mixing container 111 is the space where the first solvent introduced from the first solvent inlet 112 and the second solvent introduced from the second solvent inlet 113 are mixed. The mixing container 111 may have a specific height L_{M}. The first solvent inlet 112 is an entrance through which the first solvent is introduced from the outside and may be formed at a lower portion of the mixing container 111. The second solvent inlet 113 is an entrance through which the second solvent is introduced from the outside and may be formed at a lower portion of the mixing container 111. The first solvent inlet 112 and the second solvent inlet 113 may be formed on a side surface of the mixing container 111. In this case, the first solvent inlet 112 and the second solvent inlet 113 may be formed at the same height on the side surface of the mixing container 111. The mixed solvent outlet 114 is an exit through which the mixed solvent is discharged to the outside of the mixer 11 and may be formed at an upper portion of the mixing container 111. By forming the mixed solvent outlet 114 at the upper portion of the mixing container 111, the mixed solvent sufficiently mixed by the impeller 115 may be discharged to the outside of the mixer 11. The impeller 115 may be rotated by a motor 117 located at the top of the impeller. In the process of forcibly mixing the first and second solvents in the interior of the mixing container 111 by the impeller 115, a chemical reaction may occur in which a target component in the second solvent dissolves into the first solvent. The precursor feed port 116 may include a first precursor feed port 116a and a second precursor feed port 116b. A precursor fed to the interior of the mixing container 111 through the precursor feed port 116 may be a material that assists the chemical reaction occurring in the interior of the mixing container 111. Mixing the precursor together in the process of mixing the first and second solvents in the interior of the mixing container 111 may enhance the chemical reaction caused by the mixing of the first and second solvents.

In one embodiment, the settler 12 may include a settling container 121 in which the separation of the mixed solvent occurs, a mixed solvent inlet 122 through which the mixed solvent from the mixer 11 is introduced to the interior of the settling container 121, and a first solvent outlet 123 and a second solvent outlet 124 through which the separated first and second solvents are discharged from the settling container 121, respectively. The settling container 121 may be configured in the form of a cylinder or prism. The settling container 121 is the space where the mixed solvent introduced through the mixed solvent inlet 122 is separated by the density difference between the respective solvents. The settling container 121 may have a specific height L_{S} and a specific width W_{S}. The height L_{S} of the settling container 121 of the settler 12 may be greater than the height L_{M} of the mixing container 111 of the mixer 11. The height L_{S} of the settling container 121 may be greater than the width W_{S} of the settling container 121. It is desirable that the height Ls of the settling container 121 may be 3 times or more, but no more than 9 times, the width Ws of the settling container 121. It is more desirable that the height Ls of the settling container 121 may be 3 times or more, but no more than 6 times, the width Ws of the settling container 121.

In one embodiment, the settling container 121 may include an upper surface 121a, a lower surface 121b formed opposite to the upper surface, and a side surface 121c extending between the upper surface 121a and the lower surface 121b. If the settling container 121 takes the form of a cylinder, the side surface 121c is formed as a continuous curved surface, and if the settling container 121 takes the form of a prism, the side surface 121c may include a number of flat surfaces corresponding to the angles of the prism. The mixed solvent inlet 122 may be formed on the side surface 121c of the settling container 121. It is desirable that the mixed solvent inlet 122 may be formed at a position spaced apart from the upper surface 121a on the side surface 121c of the settling container 121. It is more desirable that the mixed solvent inlet 122 may be positioned on the side surface 121c of the settling container 121 between 0.3 and 0.7 points of the height Ls of the settling container 121. It is even more desirable that the mixed solvent inlet 122 may be positioned on the side surface 121c of the settling container 121 at the midpoint of the height Ls of the settling container 121. The first solvent outlet 123 may be formed at an upper portion of the side surface 121c of the settling container 121. The second solvent outlet 124 may be formed at a lower portion of the side surface 121c of the settling container 121. If the density of the second solvent is greater than that of the first solvent, the first solvent will rise and the second solvent will descend. Therefore, the first solvent outlet 123 may be formed at an upper portion of the settling container 121, and the second solvent outlet 124 may be formed at a lower portion of the settling container 121. In one embodiment, the mixed solvent inlet 122 may be positioned between the first solvent outlet 123 and the second solvent outlet 124. The mixed solvent introduced through the mixed solvent inlet 122 from the mixer 11 may be separated into the first solvent and the second solvent by the density difference.

In one embodiment, the connection tube 13 may provide fluidic communication between the mixed solvent outlet 114 of the mixer 11 and the mixed solvent inlet 122 of the settler 12. The mixed solvent from the mixer 11 may move to the settler 12 through the connection tube 13. To facilitate smooth movement of the mixed solvent through the connection tube 13, the mixed solvent outlet 114 of the mixer 11 needs to be positioned higher than the mixed solvent inlet 122 of the settler 12, allowing gravity to assist in the movement of the mixed solvent.

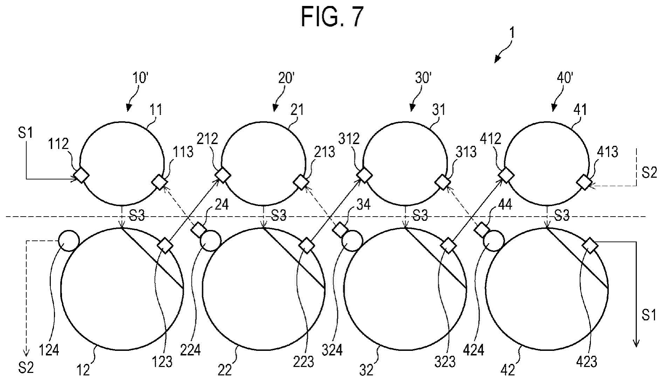

In one embodiment, the second solvent riser 14 may include a riser tube 141, a riser inlet 142, and a riser outlet 143. In the settler 12, since the first and second solvents are separated by the density difference, at least one of the two solvents (e.g., second solvent) will inevitably descend. In this case, to supply the descending second solvent to a mixer (e.g., mixer 21 in FIG. 7) of another solvent extraction device (e.g., solvent extraction device 20 in FIG. 7), a device for raising the solvent is needed. The second solvent discharged from the second solvent outlet 124 of the settler 12 may be introduced into the riser inlet 142 and then move against gravity through the riser tube 141. At this time, the second solvent may be pushed upward by the pressure of the second solvent introduced into the riser tube 141. Alternatively, the second solvent may rise through the riser tube 141 by an external force (e.g., a pump). Once the second solvent has risen to a certain height or above, it may be discharged from at least one riser outlet 143 and be supplied to another solvent extraction device.

In one embodiment, the buffer 15 may interconnect the connection tube 13 and the mixed solvent inlet 122. The buffer 15 may include a buffer tube 151 and a connector 152. The buffer tube 151 may be arranged to surround all or part of the side surface 121c of the settling container 121. The buffer tube 151 may be spaced apart from the side surface 121c of the settling container 121 by a certain distance to surround all or part of the side surface 121c. The connector 152 may provide fluidic communication between the buffer tube 151 and the mixed solvent inlet 122 of the settler 12. A plurality of connectors 152 may be arranged around the perimeter of the side surface 121c. The connectors 152 may be spaced apart from each other at regular intervals around the perimeter of the side surface 121c. For example, referring to FIG. 2, four connectors 152 may be arranged around the perimeter of the side surface 121c at 90-degree intervals. The buffer 15 allows the mixed solvent discharged from the mixer 11 to remain for a certain period before reaching the mixed solvent inlet 122, thereby inducing primary separation by the density difference. It may also maximize the separation effect of the mixed solvent by allowing the mixed solvent to be simultaneously introduced from multiple directions surrounding the side surface 121c of the settling container 121 through the plurality of connectors 152.

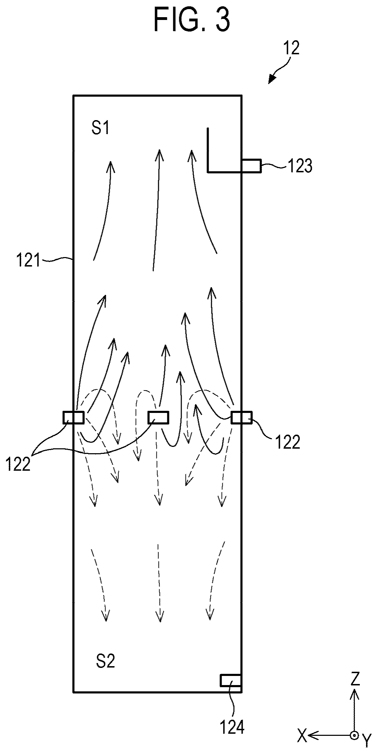

FIG. 3 is a schematic diagram illustrating the flow of internal fluids in the settler 12 according to one embodiment.

Referring to FIG. 3, the mixed solvent may be introduced to the interior of the settling container 121 through the mixed solvent inlet 122 of the settler 12. The introduced mixed solvent may be separated into a first solvent S1 and a second solvent S2 by the density difference in the interior of the settling container 121. In the process of separating the mixed solvent, the first solvent S1 having a relatively lower density may rise, while the second solvent S2 having a relatively higher density may descend. The first solvent S1 may be discharged through the first solvent outlet 123 located at an upper end of the settling container 121. The second solvent S2 may be discharged through the second solvent outlet 124 located at a lower end of the settling container 121. However, at the moment the mixed solvent is introduced to the interior of the settling container 121 through the mixed solvent inlet 122, the first solvent S1 may temporarily descend due to turbulence and gravity, and the second solvent S2 may also temporarily rise due to the same principle. At this time, to minimize the phenomenon where the first solvent S1 is incorrectly discharged through the second solvent outlet 124 due to the descent of the first solvent by gravity or the second solvent S2 is incorrectly discharged through the first solvent outlet 123 due to the rise of the second solvent, it is desirable for the distance from the mixed solvent inlet 122 to the second solvent outlet 124 to be longer. In other words, the greater the height of the settling container 121 (e.g., the height Ls of the settling container in FIG. 1), the more the separation effect between the first and second solvents may be maximized by utilizing the difference in specific gravity. It is desirable that the height Ls of the settling container 121 may be 3 times or more, but no more than 9 times, the width Ws of the settling container 121. It is more desirable that the height Ls of the settling container 121 may be 3 times or more, but no more than 9 times, the width Ws of the settling container 121.

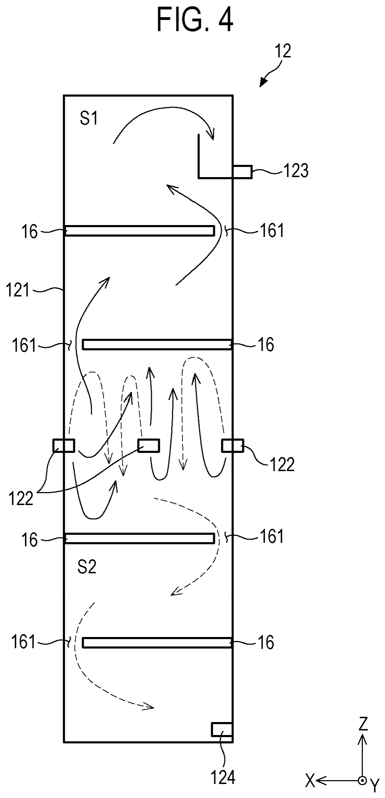

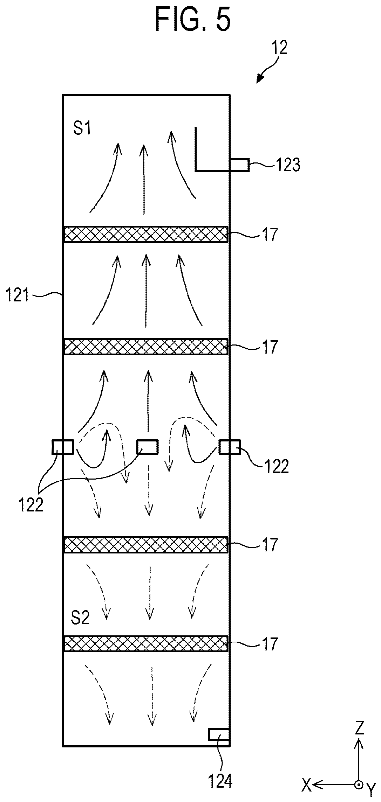

FIG. 4 is a schematic diagram illustrating the flow of internal fluids in the settler 12 according to another embodiment. FIG. 5 is a schematic diagram illustrating the flow of internal fluids in the settler 12 according to still another embodiment.

Referring to FIGS. 4 and 5, the settler 12 of the solvent extraction device 10 may further include a diaphragm 16 or 17. The diaphragm 16 or 17 may be arranged in the interior of the settling container 121 to extend across the height direction of the settler 12. A plurality of diaphragms 16 or 17 may be arranged along the height direction of the settler 12. In the process of separating the mixed solvent in the interior of the settling container 121, the diaphragms 16 and 17 obstruct the free flow of the solvents, thereby increasing the residence time of the solvents in the interior of the settling container 121 and further improving the separation efficiency.

Referring to FIG. 4, the diaphragms 16 may be made of a solid material that does not allow a liquid to pass through. In one embodiment, the diaphragms 16 may each include a through-hole 161. The through-hole 161 may be formed to penetrate the diaphragm 16 in the height direction (Z-axis direction). The first solvent S1 and the second solvent S2 may rise or descend, respectively, through the through-hole 161. The lower-density first solvent S1 may temporarily descend when it is introduced to the interior of the settling container 121, but may rise again after hitting the diaphragm 16 installed below the mixed solvent inlet 122. The higher-density second solvent S2 may temporarily rise when it is introduced to the interior of the settling container 121, but may descend again after hitting the diaphragm 16 installed above the mixed solvent inlet 122. Referring again to FIG. 4, the through-holes 161 of the diaphragms 16 adjacent to each other may be arranged to be offset from each other when viewed in the height direction (Z-axis direction). For example, when viewed from the front of the interior of the settling container 121, the through-holes 161 of the adjacent diaphragms 16 may be formed in opposite directions from each other. According to this arrangement of the through-holes 161, the first solvent S1 and the second solvent S2 may move in a zigzag pattern as they rise and descend in the interior of the settling container 121. By intentionally lengthening the movement path of the solvents according to the arrangement of the through-holes 161, the residence time of the solvents in the interior of the settling container 121 may be increased, thereby further improving the separation efficiency between the first solvent S1 and the second solvent S2.

Referring to FIG. 5, the diaphragm 17 may be formed of a mesh. The diaphragm 17 may be formed in a net-like structure. The diaphragm 17 with a mesh or net-like structure allows the first solvent S1 and the second solvent S2 to pass through, but may obstruct the flow of the solvents. Due to this flow obstruction by the diaphragm 17, the residence time of the solvents in the interior of the settling container 121 may be increased, thereby further improving the separation efficiency between the first solvent S1 and the second solvent S2.

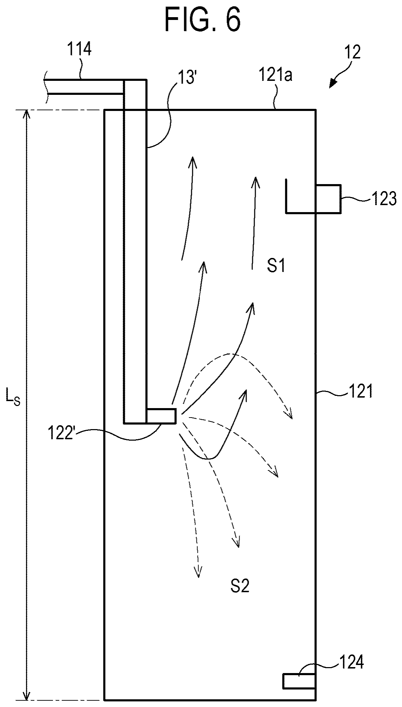

FIG. 6 is a schematic diagram illustrating a connection tube 13' inserted to the interior of the settling container 121, with a mixed solvent inlet 122' formed in the interior of the settling container 121 according to another embodiment.

Referring to FIG. 6, the mixed solvent outlet 114 of the mixer 11 may extend further out from the mixing container (e.g., mixing container 111 in FIG. 1) and be connected to one end of the connection tube 13'. In one embodiment, the connection tube 13' may penetrate the upper surface 121a of the settling container 121 and may be introduced to the interior of the settling container 121. The connection tube 13' introduced to the interior of the settling container 121 may extend downward in the height direction of the settling container 121. The mixed solvent inlet 122' may be connected to the other end of the connection tube 13' positioned in the interior of the settling container 121. The mixed solvent inlet 122' may be positioned apart from the upper surface 121a of the settling container 121. It is desirable that the mixed solvent inlet 122' may be formed between 0.3 and 0.7 points of the height Ls of the settling container 121. It is more desirable that the mixed solvent inlet 122' may be formed at the midpoint of the height Ls of the settling container 121. Referring again to FIG. 6, the mixed solvent inlet 122' may be arranged such that the mixed solvent is injected in a direction crossing the height direction of the settling container 121. It is desirable that the mixed solvent inlet 122' may be arranged such that the mixed solvent is injected in a direction perpendicular to the height direction of the settling container 121. As the mixed solvent inlet 122' is positioned in the interior of the settling container 121, various potential process-related issues that may occur in the process of moving the mixed solvent to the settling container 121 may be reduced, and equipment for a solvent extraction device (e.g., solvent extraction device 10 in FIG. 1) and a solvent extraction system (e.g., solvent extraction system 1 in FIG. 7) may be simplified.

FIG. 7 is a schematic plan view of a solvent extraction system 1 according to one embodiment.

Referring to FIG. 7, the solvent extraction system 1 may include a plurality of solvent extraction devices. For example, the solvent extraction system 1 may include a first device 10', a second device 20', a third device 30', and a fourth device 40'. Each of the first device 10', the second device 20', the third device 30', and the fourth device 40' may include components of the solvent extraction device 10 described with reference to FIGS. 1 to 6. In FIG. 7, the solvent extraction system 1 is illustrated as including a total of four stages of solvent extraction devices, but may include as many as 100 or more stages of solvent extraction devices. The first device 10', the second device 20', the third device 30', and the fourth device 40' are functionally connected to each other, allowing the first solvent S1 and the second solvent S2 to be exchanged. For example, the first solvent S1 and the second solvent S2 may flow in opposite directions, with mixing and separation repeatedly occurring.

Referring to FIG. 7, the first solvent S1 is introduced into the mixer 11 of the first device 10', and sequentially undergo repeated mixing and separation in the first device 10', the second device 20', the third device 30', and the fourth device 40' until it is finally recovered from a settler 42 of the fourth device 40'. The second solvent S2 may be introduced into a mixer 41 of the fourth device 40', and sequentially undergo repeated mixing and separation in the fourth device 40', the third device 30', the second device 20', and the first device 10' until it is finally recovered from the settler 12 of the first device 10'.

Referring again to FIG. 7, solid arrows indicate the flow of the first solvent S1, dotted arrows indicate the flow of the second solvent S2, and one-dot dashed arrows indicate the flow of a mixed solvent S3. For example, regarding the flow of the first solvent S1, the first solvent S1 supplied from the outside may be introduced into the first solvent inlet 112 of the mixer 11 of the first device 10'. The first solvent S1 introduced into the mixer 11 of the first device 10' may be mixed with the second solvent S2 in the interior of the mixer 11 and may be delivered to the settler 12 of the first device 10'. In the settler 12 of the first device 10', the first solvent S1 and the second solvent S2 may be separated again and be discharged through the first solvent outlet 123 and the second solvent outlet 124, respectively. The first solvent S1 discharged through the first solvent outlet 123 may be introduced into a first solvent inlet 212 of a mixer 21 of the second device 20'. The first solvent S1 may repeat the above flow in a plurality of solvent extraction devices and may be recovered to the outside from the settler 42 of a final solvent extraction device (fourth device 40' in FIG. 7). For example, regarding the flow of the second solvent S2, the second solvent S2 supplied from the outside may be introduced into a second solvent inlet 413 of the mixer 41 of the fourth device 40'. The second solvent S2 introduced into the mixer 41 of the fourth device 40' may be mixed with the first solvent S1 in the interior of the mixer 41 and may be delivered to the settler 42 of the fourth device 40'. In the settler 42, the first solvent S1 and the second solvent S2 may be separated again and be discharged through a first solvent outlet 423 and a second solvent outlet 424, respectively. The second solvent S2 discharged through the second solvent outlet 424 may be introduced into a second solvent inlet 313 of a mixer 31 of the third device 30'. The second solvent S2 may repeat the above flow in a plurality of solvent extraction devices and may be recovered to the outside from the settler 12 of a final solvent extraction device (first device 10' in FIG. 7). In this way, the solvent extraction system 1 may more effectively separate target metal ions from impurities contained in the solvents by including a plurality of solvent extraction devices that are functionally connected to each other.

The technical idea of the present disclosure has been described heretofore with reference to some embodiments and examples illustrated in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

### EXPLANATION OF REFERENCE NUMERALS

1: solvent extraction system, 10: solvent extraction device, 11: mixer, 12: settler, 13: connection tube, 14: second solvent riser, 15: buffer, 16: diaphragm, 17: diaphragm

## Claims

1. A solvent extraction device comprising:
a mixer including a mixing container, a first solvent inlet, a second solvent inlet, a mixed solvent outlet, and an impeller, wherein the impeller mixes a first solvent and a second solvent having different densities to produce a mixed solvent;
a settler including a settling container, a mixed solvent inlet, a first solvent outlet, and a second solvent outlet, and configured to separate the mixed solvent based on a density difference; and
a connection tube configured to connect the mixed solvent outlet of the mixer with the mixed solvent inlet of the settler,
wherein the settling container of the settler includes an upper surface, a lower surface formed opposite to the upper surface, and a side surface extending between the upper surface and the lower surface, and the mixed solvent inlet is formed on the side surface of the settling container or in an interior of the settling container.

2. The solvent extraction device of claim 1, wherein the mixed solvent inlet is formed at a position spaced apart from the upper surface.

3. The solvent extraction device of claim 2, wherein the mixed solvent inlet is formed between 0.3 and 0.7 points of a height of the settling container.

4. The solvent extraction device of claim 1, wherein the mixed solvent outlet of the mixer is positioned higher than the mixed solvent inlet of the settler.

5. The solvent extraction device of claim 4, wherein the mixed solvent inlet of the settler is positioned between the first solvent outlet and the second solvent outlet.

6. The solvent extraction device of claim 1, further comprising a buffer positioned between the mixed solvent inlet and the connection tube,
wherein the buffer is arranged to surround all or part of the side surface of the settling container.

7. The solvent extraction device of claim 1, wherein the settler further includes a plurality of diaphragms arranged in the interior of the settling container to extend across a height direction of the settler.

8. The solvent extraction device of claim 7, wherein the diaphragms are formed in a net-like structure.

9. The solvent extraction device of claim 7, wherein the diaphragms each include a through-hole, and
wherein positions of the through-holes in adjacent diaphragms among the plurality of diaphragms are offset from each other when viewed in the height direction of the settler.

10. The solvent extraction device of claim 1, wherein a height direction length of the settler is greater than a height direction length of the mixer.

11. The solvent extraction device of claim 1, wherein a height direction length of the settler is 3 times or more, but no more than 9 times, a width direction length of the settler.

12. The solvent extraction device of claim 1, wherein the first solvent is an organic solvent, and the second solvent is an aqueous solvent.

13. A solvent extraction system comprising a plurality of solvent extraction devices,
wherein each of the solvent extraction devices includes:
a mixer including a mixing container, a first solvent inlet, a second solvent inlet, a mixed solvent outlet, and an impeller, wherein the impeller mixes a first solvent and a second solvent having different densities to produce a mixed solvent;
a settler including a settling container, a mixed solvent inlet, a first solvent outlet, and a second solvent outlet, and configured to separate the mixed solvent based on a density difference; and
a connection tube configured to connect the mixed solvent outlet of the mixer with the mixed solvent inlet of the settler,
wherein the settling container of the settler includes an upper surface, a lower surface formed opposite to the upper surface, and a side surface extending between the upper surface and the lower surface, and the mixed solvent inlet is formed on the side surface of the settling container or in an interior of the settling container, and
wherein the respective solvent extraction devices are functionally connected to each other, allowing the first solvent, the second solvent, and the mixed solvent to be exchanged.

14. The solvent extraction system of claim 13, wherein the solvent extraction system comprises a first device and a second device,
wherein the first solvent discharged from a settler of the first device is introduced into a mixer of the second device, and the second solvent discharged from a settler of the second device is introduced into a mixer of the first device, and
wherein the second solvent discharged from the settler of the first device and the first solvent discharged from the settler of the second device are recovered, respectively.
